# EUROPÄISCHE PATENTSCHRIFT

(11) **EP 1 874 587 B1**
(45) Veröffentlichungstag und Bekanntmachung des Hinweises auf die Patenterteilung: **23.09.2009**
(21) Anmeldenummer: 05744613.0
(22) Anmeldetag: 26.04.2005
(51) Int. Cl.: B60R 16/02

(54) **KONFIGURATIONSSYSTEM EINES FAHRZEUGS UND VERFAHREN ZUR KONFIGURATION MINDESTENS EINER STEUEREINHEIT DES KONFIGURATIONSSYSTEMS**
CONFIGURATION SYSTEM OF A VEHICLE AND METHOD FOR CONFIGURING AT LEAST ONE CONTROL UNIT OF THE CONFIGURATION SYSTEM
SYSTEME DE CONFIGURATION D'UN VEHICULE ET PROCEDE DE CONFIGURATION D'AU MOINS UNE UNITE DE COMMANDE DUDIT SYSTEME DE CONFIGURATION

(43) Veröffentlichungstag der Anmeldung: 09.01.2008
(73) Patentinhaber: Bayerische Motoren Werke Aktiengesellschaft, 80809 München (DE)
(72) Erfinder: SÜSS, Christian, 85256 Vierkirchen (DE); SCHRÖDER, Astrid, 80799 München (DE)
(86) Internationale Anmeldenummer: PCT/EP2005/004435
(87) Internationale Veröffentlichungsnummer: WO 2006/114112

(56) Entgegenhaltungen:
- EP-A1- 1 498 341
- WO-A-00/58131
- DE-A1- 10 000 337
- FR-A- 2 778 261
- US-A1- 2002 087 240
- US-A1- 2004 002 799
- US-B1- 6 505 100

## Beschreibung

Die Erfindung betrifft ein Konfigurationssystem eines Fahrzeugs mit mindestens einer Funktionseinheit, einer zu der Funktionseinheit zugehörigen Steuereinheit und einer im Fahrzeug vorgesehenen Parametriereinheit, die mit der Steuereinheit operativ verbunden ist. Das Konfigurationssystem umfasst ferner ein durch die Parametriereinheit auslesbares Speichermittel, das Konfigurationsinformationen für die Steuereinheit enthält, anhand denen eine Parametrierung der Steuereinheit vornehmbar ist.

Die Erfindung betrifft weiterhin ein Verfahren zur Konfiguration mindestens einer zu einer Funktionseinheit gehörigen Steuereinheit eines Konfigurationssystems eines Fahrzeugs, wobei die Konfiguration unabhängig vom Herstellungsprozess des Fahrzeugs mittels einer im Fahrzeug eingebauten Parametriereinheit erfolgt.

Ein gattungsgemäßes Konfigurationssystem weist üblicherweise eine Mehrzahl an Funktionseinheiten auf, die mittels zugehöriger Steuereinheiten steuerbar sind. Als Funktionseinheiten in einem Fahrzeug werden beispielsweise Antriebsmotoren, eine Scheibenwischvorrichtung, eine Fensterhebevorrichtung, eine Klimaanlage oder ähnliches verstanden. Jede dieser Funktionseinheiten wird von einer zugehörigen, elektronischen Steuereinheit gesteuert. Hierzu verarbeitet die zugehörige Steuereinheit entsprechende, den Betrieb der jeweiligen Funktionseinheit charakterisierende Parameter, um z.B. länderspezifische Eigenheiten zu berücksichtigen. So wird beispielsweise bei Fahrzeugen, die in die USA ausgeliefert werden, die Geschwindigkeit in mph, in anderen Ländern in km/h angezeigt. Im Falle einer Scheibenwischvorrichtung werden unter anderem das Gewicht der Wischblatthaltegestelle und die maximale Wischgeschwindigkeit berücksichtigt, um einen störungsfreien und optimalen Betrieb der Scheibenwischvorrichtung zu gewährleisten.

Das in der DE 100 00 337 A1 beschriebene Konfigurationssystem umfasst eine im Fahrzeug eingebaute Parametriereinheit, die mit der Steuereinheit operativ verbunden ist, um eine Parametrierung von nachträglich eingebauten Steuereinheiten mittels externer Parametriereinheiten in einer entsprechend ausgestatteten Werkstatt überflüssig zu machen. In der Parametriereinheit sind, beispielsweise in einem Permanentspeicher, Sätze von Parametern sowohl für während des Produktionsprozesses in das Fahrzeug eingebaute Funktionseinheiten als auch für andere, nach Abschluss der Herstellung des Fahrzeugs in selbiges einbaubare Funktionseinheiten hinterlegt. Zu jeder Funktionseinheit gehört ein entsprechender Satz an Parametern, welche die zur jeweiligen Funktionseinheit gehörige Steuereinheit verarbeiten muss, um ein ordnungsgemäßes Funktionieren sicherzustellen.

Die Parametriereinheit der DE 100 00 337 A1 ist geeignet, nach Austausch einer oder mehrerer Funktionseinheiten und/oder Steuereinheiten die jeweilige Steuereinheit in Abhängigkeit der zugehörigen Funktionseinheit zu jedem Betriebszeitpunkt des Fahrzeugs zu parametrieren. Die Parametrierung erfolgt dabei dergestalt, dass die Parametriereinheit in regelmäßige bestimmten Zeitabständen prüft, ob die Funktionseinheiten und die zugehörigen Steuereinheiten noch intakt sind, wobei nach der Diagnose einer neuen oder defekten Steuer- bzw. Funktionseinheit die entsprechende Steuereinheit neu parametriert wird. Die Parametrierung wird damit aufgrund eines Soll-/Ist-Vergleichs vorgenommen.

Der Nachteil des in der DE 100 00 337 A1 beschriebenen Konfigurationssystem besteht darin, dass beim Einbau der Parametriereinheit und insbesondere dem Einspeichern entsprechender Sätze an Parametern die zugehörigen Funktionseinheiten und/oder Steuereinheiten und deren Funktion bereits bekannt sein müssen. Es ist mit anderen Worten nur mit großem Aufwand möglich, Funktionseinheiten und/oder Steuereinheiten zu parametrieren, welche der Parametriereinheit nicht bekannt sind. In diesem Falle muss in herkömmlicher Weise eine Parametrierung mittels spezieller Werkzeuge von außerhalb in einer entsprechend ausgestatteten Werkstatt vorgenommen werden.

Aus der EP-A-1 498 341 ist ein System zur Konfiguration der Charakteristika eines Kraftfahrzeugs entsprechend den Wünschen des Fahrers bekannt. Eine Mehrzahl von Einzelcharakteristika wird jeweils zu einer Fahrzeugcharakteristik zusammengefasst und diese sind jeweils vom Fahrer gesamthaft auswählbar.

Es ist die Aufgabe der vorliegenden Erfindung, ein erfindungsgemäßen Konfigurationssystem und ein entsprechendes Konfigurationsverfahren vorzuschlagen, mittels welchen eine einfachere Konfigurierung, insbesondere Parametrierung, von Steuereinheiten möglich ist.

Diese Aufgabe wird erfingdungsgemäß mit den Merkmalen der unabhängigen Patentansprüche gelöst. Vorteilhafte Ausgestaltungen ergeben sich aus den abhängigen Patentansprüchen.

Dies ermöglicht eine vollautomatische Konfiguration einer in das Konfigurationssystem eingebrachten Steuereinheit ohne externe Werkzeuge. Unter dem Begriff der Konfiguration ist im Rahmen der vorliegenden Beschreibung eine Parametrierung oder eine Initialisierung oder auch beides zusammen zu verstehen. Der Begriff der Steuereinheit, wie er in der vorliegenden Beschreibung verwendet wird, kann stellvertretend für eine Soflware-Funktion oder auch ein physikalisches Steuergerät stehen.

Die vollautomatische Konfiguration wird durch das Vorsehen von Auswertungsvorschriften ermöglicht, welche eine automatische Interpretation der Konfigurationsinformationen für die Steuereinheit sowie für das Fahrzeug ermöglichen. Die Konfigurationsinformationen für die Steuereinheit umfassen Sätze von Parametern, welche sämtliche Parametrier- und/oder Initialisierungsmöglichkeiten einer Steuereinheit umfassen. In Verbindung mit den Konfigurationsinformationen für das Fahrzeug, die das Fahrzeug im einzelnen beschreiben und auch als Fahrzeugkontext bezeichnet werden, kann eine Konfiguration der Steuereinheit erfolgen. Diese umfassen beispielsweise Informationen über eine Ausstattungs- oder Länderkonfiguration des Fahrzeugs.

Die automatische Konfiguration kann bereits während der Herstellung des Fahrzeugs genutzt werden. Die automatische Konfiguration weist jedoch auch dann Vorteile auf, wenn eine Steuereinheit und/oder eine Funktionseinheit ausgetauscht oder nachträglich in das Fahrzeug neu eingebracht werden. Eine solche permanent im Fahrzeug eingebaute Parametriereinheit ermöglicht somit eine zuverlässige, schnelle und flexible Konfiguration von in das Fahrzeug einzubauenden, zu entsprechenden Funktionseinheiten gehörigen Steuereinheiten.

Die operative Verbindung zwischen der Parametriereinheit und der Steuereinheit ist vorteilhafterweise in Form eines Datenbusses ausgebildet.

In einer zweckmäßigen Ausgestaltung umfasst das Konfigurationssystem eine Ablaufsteuereinheit, die den Ablauf der Konfiguration der Steuereinheit steuert und überwacht. Die Ablaufsteuereinheit gewährleistet, dass die Konfiguration einer Steuereinheit und/oder einer Funktionseinheit vollautomatisch erfolgen kann. Es wird beispielsweise eine korrekte Reihenfolge bei der Konfiguration einer Mehrzahl an Steuereinheiten berücksichtigt. Die Ablaufsteuereinheit kann ferner Bedingungen berücksichtigen.

Es ist besonders zweckmäßig, wenn die Ablaufsteuerung gemäß einer weiteren Ausgestaltung dazu eingerichtet ist, Zustände und/oder Bedingungen und/oder Triggersignale des Konfiguationssystems zu erkenne. Ein Triggersignal könnte beispielsweise der Einbau oder die Aktualisierung einer Steuer- und/oder Funktionseinheit sein. Das Triggersignal könnte kombiniert mit verschiedenen Fahrzeugzuständen sein, so dass eine Konfiguration während der Fertigung zu verschiedenen Zeitpunkten erfolgen kann. Die Ablaufsteuerung kann vernetzt werden mit weiteren Systemen, wie z.B. einem System zur Positionsbestimmung (Global Positioning System GPS). Dabei werden Informationen z.B. in Abhängigkeit des geographischen Ortes als Triggersignal definiert und von der Parametriereinheit erkannt. Z.B. könnte die Konfiguration einer Steuereinheit erst dann vorgenommen werden, wenn die Konfiguration einer anderen Steuereinheit bereits abgeschlossen ist.

In einer weiteren zweckmäßigen Ausgestaltung ist vorgesehen, dass die Konfigurationsinformationen für die Steuereinheit, die Konfigurationsinformationen für das Fahrzeug und die Auswertungsvorschriften in einem generischen Format in dem Speichermittel gespeichert sind. Das Vorsehen dieser Daten in einem generischen Format ermöglicht es, Daten auf einfache Weise auszutauschen, zu ändern oder in sonstiger Weise zu verifizieren. Das Verarbeiten dieser Daten erfolgt unter Zuhilfenahme der Auswertungsvorschriften, welche ebenfalls in dem generischen Format vorliegen, so dass diese zu einem gegebenen Zeitpunkt angepasst oder geändert werden können. Damit ist es möglich, sämtliche für die Konfiguration erforderlichen Daten Ressourcen sparend und skalierbar verfügbar zu machen, wodurch diese auch auf kleinen Mikrokontrollern einsetzbar sind.

Eine weitere Ausgestaltung sieht vor, dass die Konfigurationsinformationen Bedingungen hinsichtlich eines Parameterwerts und/oder eines Verhaltens der Steuereinheit und/oder eines Inbetriebnahmeschritts und/oder eines Vorhandenseins einer weiteren Steuereinheit umfassen, welche zur Vornahme einer Parametrierung und/oder Initialisierung erfüllt sein müssen. Hierdurch wird sichergestellt, dass die automatische Konfiguration in einer geordneten und korrekten Weise vorgenommen werden kann.

Es ist weiterhin vorteilhaft, wenn das Speichermittel einen in der Steuereinheit angeordneten Speicher zur Aufnahme von Konfiguratiohsinformationen für die Steuereinheit und/oder den Auswertungsvorschriften umfasst. Das Speichermittel muss demnach nicht notwendigerweise ein zentrales Speichermittel darstellen. Vielmehr kann es vorteilhaft sein, die eine Steuereinheit unmittelbar betreffenden Konfigurationsinformationen in dieser selbst vorzusehen. Hierdurch wird insbesondere das nachträgliche Einbringen von Steuereinheiten begünstigt, da Informationen eines zentral angeordneten Speichers der Parametriereinheit nicht geändert oder aktualisiert zu werden brauchen. Gemäß dieser Ausgestaltung ist ebenfalls das Vorsehen von, insbesondere die Steuereinheit betreffende, Auswertungsvorschriften in dem Speichermittel der Steuereinheit vorgesehen. Dadurch kann beim nachträglichen Einbringen einer Steuereinheit ebenfalls auf Anpassungen der Parametriereinheit verzichtet werden. Sämtliche für die Konfiguration einer Steuereinheit notwendigen Informationen sind in dieser selbst gespeichert.

Es kann weiterhin vorgesehen sein, dass das Speichermittel einen in der Parametriereinheit angeordneten Speicher zur Aufnahme von Konfigurationsinformationen für das Fahrzeug und/oder den Auswertungsvorschriften umfasst. Gemäß dieser Ausgestaltung ist ein zentralistischer Ansatz vorgesehen, nach dem die für die Konfiguration der Steuereinheiten notwendigen Informationen in einem zentralen Speichermittel der Parametriereinheit angeordnet sind.

Gemäß einer weiteren Ausgestaltung ist die Parametriereinheit als zumindest eine zentrale Steuereinheit ausgebildet. Das Konfigurationssystem kann als Client-/Master-Systern konzipiert werden. Hierbei konfiguriert, d.h. parametrisiert und/oder initialisiert, ein als Master dienendes zentrales Steuergerät die als Client anzusehenden Steuereinheiten.

Gemäß einer anderen Variante ist vorgesehen, dass die Parametriereinheit durch die Steuereinheit selbst gebildet ist. Das Konfiguriersystem ist gemäß dieser Variante als so genanntes Cllent-/Server-System konzipiert, bei dem sich die Steuereinheiten die Konfigurationsinformationen von einem zentralen Steuergerät, der Parametriereinheit, besorgen, um die Auswertung selbst vorzunehmen.

Bei einem erfindungsgemäßen Verfahren zur Konfiguration mindestens einer zu einer Funktionseinheit gehörigen Steuereinheit eines Konfigurationssystems eines Fahrzeugs werden zur Parametrierung der Steuereinheit durch die Parametriereinheit folgende Schritte durchgeführt: Die Parametriereinheit liest aus einem Steuermittel des Konfigurationssystems Konfigurationsinformationen für die Steuereinheit aus und wertet anhand von in dem Speichermittel enthaltenen Auswertungsvorschriften die Konfigurationsinformationen aus. Die Parametriereinheit identifiziert die für eine Parametrierung der Steuereinheit fehlenden Konfigurationsinformationen. Sie liest ferner die fehlenden Konfigurationsinformationen aus dem Speichermittel aus und wertet die fehlenden Konfigurationsinformationen anhand der Auswertungsvorschriften aus, um eine Parametrierung der Steuereinheit vorzunehmen. Dieses Verfahren ermöglicht eine vollautomatische und selbständige Konfiguration einer Steuereinheit in einem Konfigurationssystem ohne externe Werkzeuge.

In einer Ausgestaltung des erfindungsgemäßen Verfahrens umfasst die Parametrierung eine Ermittlung von zu setzenden Parameterwerte der Steuereinheit und das Setzen entsprechender Parameterwerte. Die Ermittlung der zu setzenden Parameter umfasst dabei die Berücksichtigung eines bestimmten erwünschten Verhaltens der Steuereinheit.

Ferner umfasst die Parametrierung eine Auswertung von Bedingungen, so dass die automatische Konfiguration in korrekter Weise erfolgen kann.

Zur Initialisierung der Steuereinheit liest die Parametriereinheit aus einem Speichermittel des Konfigurationssystems die Konfigurationsinformationen für die Steuereinheit anhand der Auswertungsvorschriften aus und wertet diese aus. Die Parametriereinheit identifiziert ferner die für eine Initialisierung der Steuereinheit fehlenden Konfigurationsinformationen. Sie liest die fehlenden Konfigurationsinformationen aus dem Speichermittel aus und wertet die fehlenden Konfigurationsinformationen anhand der Auswertungsvorschriften aus und nimmt eine Initialisierung der Steuereinheit vor.

Es ist weiter bevorzugt, wenn die Konfiguration individuell für jede Steuereinheit durchgeführt wird, wobei, wie oben bereits beschrieben, Zustände und/oder Bedingungen und/oder Triggersignale für eine Konfiguration berücksichtigt werden.

In einer weiteren Ausgestaltung ist vorgesehen, dass die Konfiguration der Steuereinheit durch eine zentrale Steuereinheit vorgenommen wird (Parametriereinheit), welche das Speichermittel mit zumindest den Konfigurationsdaten für das Fahrzeug erfasst. Gemäß diesem bevorzugten Verfahren erfolgt eine Konfiguration der Steuereinheit durch eine zentral angeordnete Parametriereinheit, welche sämtliche für die Auswertung relevanten Daten und Informationen umfasst.

Gemäß einer anderen Ausgestaltung ist vorgesehen, dass die Konfiguration durch die Steuereinheit selbst vorgenommen wird, welche aus einem zentral verfügbaren Speichermittel die für eine Konfiguration fehlenden Informationen ausliest und weiterverarbeitet. Die Konfiguration der Steuereinheiten erfolgt gemäß diesem Ansatz dezentral, wobei eine Steuereinheit die ihr fehlenden Informationen aus einem zentral verfügbaren Speichermittel abruft.

Es ist dabei bevorzugt, wenn die Konfiguration und Steuerung durch eine Ablaufsteuerung erfolgt, welche in der Lage ist, Zustände und/oder Bedingungen und/oder Triggersignale zu erkennen. Hierdurch wird eine fehlerfreie Konfiguration auch einer Vielzahl an, gegebenenfalls voneinander abhängigen, Steuereinheiten sichergestellt.

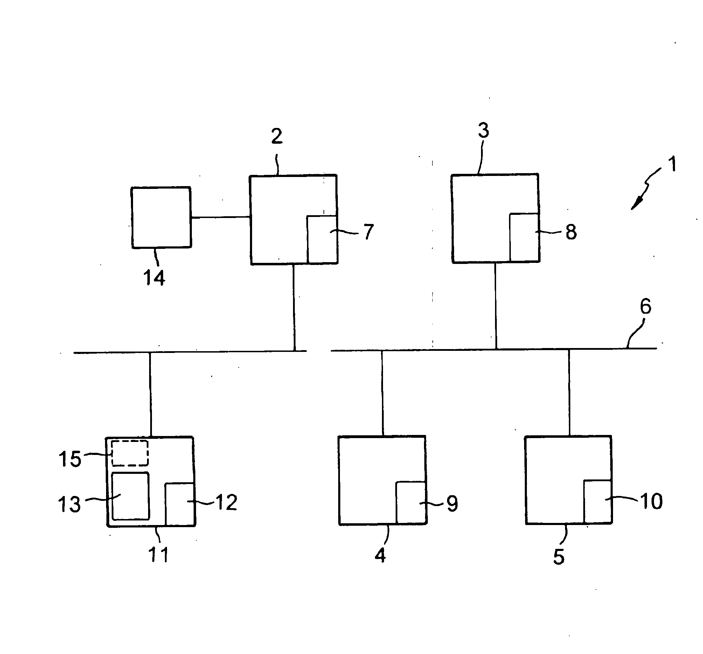

Die Erfindung wird nachfolgend anhand einer Figur näher erläutert. Die Figur zeigt in schematischer Form ein elektronisches Konfigurationssystem 1 eines Fahrzeugs.

Das Konfigurationssystem 1 umfasst eine Mehrzahl an Steuereinheiten 2, 3, 4, 5, welche über eine Datenleitung 6 miteinander zum Datenaustausch verbunden sind. Die Datenleitung ist bevorzugt in Form eines Datenbusses ausgebildet. Jeder der Steuereinheiten 2, 3, 4, 5 ist eine Funktionseinheit 14 zugeordnet, welche durch die Steuereinheit gesteuert wird. In der zeichnerischen Darstellung gemäß der Figur ist der Übersichtlichkeit halber lediglich der Steuereinheit 2 eine derartige Funktionseinheit 14 zugeordnet. Die Steuereinheiten 2, 3, 4, 5 verfügen jeweils über einen Speicher 7, 8, 9, 10 zur Ablage von zumindest Konfigurationsdaten für die jeweilige Steuereinheit.

Ferner ist eine ein zentrales Steuergerät darstellende Parametriereinheit 11 vorgesehen, welche über einen Speicher 12 verfügt, in dem u. a. Konfigurationsinformationen für das Fahrzeug hinterlegt sind. Darüber hinaus umfasst der Speicher 12 Auswertungsvorschriften, anhand denen die Parametriereinheit 11 die für eine Konfiguration einer jeweiligen Steuereinheit 2, 3, 4, 5 relevanten Konfigurationsdaten ermitteln kann. Die Interpretation und Auswertung der Konfigurationsinformationen erfolgt unter Zuhilfenahme einer Auswerteeinheit 13, welche beispielhaft der Parametriereinheit 11 zugeordnet ist. In einer anderen Ausführungsform könnten zumindest einige der Steuereinheiten ebenfalls über eine Auswerteeinheit verfügen. Die Parametriereinheit 11 umfasst ferner eine Ablaufsteuereinheit 15, welche ebenfalls über das Konfigurationssystem verteilt angeordnet sein könnte.

Eine Konfiguration einer Steuereinheit umfasst eine Parametrierung und/oder eine Initialisierung derselben.

Die Parametrierung dient zur Anpassung von Funktionen anhand der Beschreibung eines konkreten Fahrzeugs, was auch als Fahrzeugkontext oder Fahrzeugprofil bezeichnet wird. Das Fahrzeugprofil umfasst z.B. Informationen über die Fahrzeugausstattung oder fahrzeugspezifische Informationen, wie z.B. das Land der Auslieferung. Ziel der Parametrierung ist es, eine Variantenvielfalt von Steuergeräten zu vermeiden, um Kosten zu sparen. Es sollen durch die Parametrierung Funktionen an ein konkretes Fahrzeug durch das Setzen von Parameterwerten angepasst werden. Ferner soll ein bestimmtes, gewünschtes Verhalten aktiviert werden. Dies kann beispielsweise das Handling eines Schiebedachs oder eines Cabriodachs betreffen.

Die Initialisierung dient zur Anpassung einer Steuereinheit an ihre tatsächliche Umgebung durch die Ausführung von Inbetriebnahmeschritten. Beispielsweise wird im Rahmen der Initialisierung eine Steuereinheit an ihre physikalische Umgebung angepasst, d.h. kalibriert. Beispiele hierfür wären ein Lenkwinkelabgleich oder eine Fensterheberinitialisierung. Die Initialisierung könnte weiterhin das Anpassen zweier Steuereinheiten aneinander darstellen. Dies wird auch als Abgleich bezeichnet. Ein solcher Abgleich könnte beispielsweise zwischen einer Motorsteuerung und einer Wegfahrsperre erfolgen. Ferner bezweckt die Initialisierung das Setzen des Verhaltens eines Steuergerätes auf einen vorgegebenen Stand, wie z.B. Datum oder Uhrzeit.

Mit der Erfindung werden ein Konfigurationssystem und ein Verfahren zum Konfigurieren eines derartigen Konfigurationssystems vorgeschlagen, welche eine automatische Konfigurierung, d.h. Parametrierung und Initialisierung, der Steuereinheiten ermöglicht. Die Erfindung untergliedert sich in folgende Abschnitte: Die Konfigurierinformation für eine Steuereinheit wird in einer vorgegebenen, generischen Form bzw. Sprache spezifiziert. Die Konfigurierinformation für eine Steuereinheit beinhaltet unter anderem Bedingungen, bei denen ein bestimmter Parameterwert einer Steuereinheit gesetzt werden soll oder ein bestimmtes Verhalten bzw. eine Ausprägung einer Steuereinheit aktiv sein soll. Bedingungen können dabei z.B. das Vorhandensein einer anderen Steuereinheit sein. Die Konfigurierinformation kann darüber hinaus auch Bedingungen beinhalten, die für eine Inbetriebnahme notwendig sind, z.B. auszuführende Inbetriebnahmeschritte. Die spezielle, generische Form bzw. Sprache führt zusammen mit den ebenfalls in generischer Form vorliegenden Auswertungsvorschriften dazu, dass die automatische Konfiguration Ressourcen sparend und skalierbar ist und damit auch in Steuereinheiten mit geringem Speicherplatz einsetzbar ist.

Die Konfigurierinformation für eine Steuereinheit wird zusammen mit der Steuereinheit, z.B. bei der Fertigung oder einer Nachrüstung, in das Fahrzeug verbracht. Hierzu kann die Konfigurierinformation in einen internen Speicher (siehe Figur) der Speichereinheit oder den zentralen Speicher der Parametriereinheit eingespeichert werden. Daneben wird ebenfalls eine Beschreibung dieses konkreten Fahrzeugs in Form von Konfigurierinformationen für das Fahrzeug vorzugsweise in dem Speichermittel der Parametriereinheit abgelegt. Die Konfigurierinformation für das Fahrzeug kann beispielsweise Informationen über die Fahrzeugausstattung enthalten. Daneben lässt es das Verfahren zu, weitere Konfigurierinformationen zum Fahrzeug gegebenenfalls dynamisch aus dem Konfigurationssystem zu erzeugen bzw. zu erkennen, indem Parameter anderer Steuereinheiten abgefragt werden oder indem die Nachrichten, welche zwischen verschiedenen Steuereinheiten auf dem Datenbus ausgetauscht werden, "mitgehört" werden.

Die Konfiguration einer Steuereinheit ist durch bestimmte Triggerereignisse aktivierbar. Das Verfahren kann damit derart konfiguriert werden, dass es beim Auftreten bestimmter Ereignisse oder auch einer Kombination von Ereignissen seinen Ablauf startet. Triggerereignisse können z.B. der Einbau oder das Update einer Steuereinheit sein. Dies kann unter Umständen kombiniert mit bestimmten Fahrzeugzuständen erfolgen. Ein Triggerereignis kann mit weiteren Systemen vernetzt werden, wie z.B. einem System zur Positionsbestimmung (Global Positioning System). Dabei werden Informationen z.B. aus dem GPS als Triggerereignis definiert und von der Parametriereinheit erkannt. Daraufhin können Teil- oder Gesamtkonfigurierungen angestoßen werden, wie z.B. eine automatische Umkonfiguration hinsichtlich landesspezifischer Einstellungen beim Erkennen des Überfahrens einer Landesgrenze.

Jeder Steuereinheit sind bestimmte Zustände oder Bedingungen zugeordnet, die gegeben bzw. erfüllt sein müssen, damit die Parametrierung oder Initialisierung dieser Steuereinheit gestartet werden darf bzw. das Starten sinnvoll ist. Ein zu frühes Starten könnte zu einer Fehlkonfigurierung führen, wenn Belegungen für Konfigurierinformationen erst zu einem späteren Zeitpunkt bekannt sind und z.B. eine Steuereinheit auf das Einbringen einer anderen Steuereinheit warten muss, da dessen Parameterbelegung ein Bestandteil ihrer Konfigurierinformation ist.

Das Konfigurationssystem umfasst eine Ablaufsteuerung, die im Ausführungsbeispiel beispielhaft in der Parametriereinheit angeordnet ist. Die Ablaufsteuerung erkennt, ob die notwendigen Zustände bzw. Bedingungen für eine Steuereinheit eingetreten sind und schaltet erst dann die Steuereinheit für eine Konfigurierung frei. Die Ablaufsteuerung ist in der Lage, die Triggerereignisse zu erkennen. Tritt ein solches Triggerereignis oder auch mehrere Ereignisse auf, so stößt die Ablaufsteuerung die Parametrierung und/oder Initialisierung der Steuereinheit an. Dies kann unter Umständen in Abhängigkeit davon erfolgen, ob eine Steuereinheit als "konfigurierbereit" gekennzeichnet ist. Je nach Art des Triggerereignisses werden Komplett- oder Teilparametrierungen bzw. - konfigurationen (z.B. nur die Parametrierung einer aktualisierten Funktion und der davon abhängigen Steuereinheiten) angestoßen. Die Ablaufsteuerung erkennt hierbei Abhängigkeiten zwischen Steuereinheiten bezüglich der Parametrierung, wozu auch zeitliche Abhängigkeiten gehören.

Die Konfiguration einer Steuereinheit umfasst eine Parametrierung und eine sich daran anschließende Initialisierung. Der Ablauf der Parametrierung ist wie folgt: Wird die Parametrierung für eine Steuereinheit angestoßen, so wird zuerst die zu der Funktion gehörende Konfigurierinformation (z.B. aus dem in der Steuereinheit enthaltenen Speicher) eingelesen und durch die Steuereinheit festgestellt, welche Informationen zur Parametrierung von welchen Steuereinheiten und/oder der Parametriereinheit eingeholt werden müssen. Nach dem Einholen dieser Informationen werden Bedingungen und/oder Zustände ausgewertet und so die zu setzenden Parameterwerte bzw. das zu aktivierende Verhalten der Funktion ermittelt. Dies kann, wie dies in der Figur dargestellt ist, zentral durch die Parametriereinheit erfolgen. Dieser Vorgang könnte jedoch auch durch eine jeweilige Steuereinheit selbst vorgenommen werden. Schließlich werden die Parameterwerte gesetzt bzw. das entsprechende Verhalten aktiviert.

Der Ablauf der Initialisierung ist wie folgt. Wird die Initialisierung für eine Steuereinheit angestoßen, so wird zuerst die zu der Steuereinheit gehörende Konfigurierinformation eingelesen und festgestellt, welche Information zur Initialisierung von anderen Steuereinheiten und/oder der Parametriereinheit eingeholt werden müssen. Nach dem Einholen dieser Informationen werden die Bedingung und/oder Zustände ausgewertet und so die durchzuführenden Inbetriebnahmeschritte ermittelt. Diese Schritte werden dann ausgeführt. Wie bereits bei der Parametrierung dargestellt, kann dies zentral durch die Parametriereinheit oder die jeweiligen Steuereinheiten erfolgen.

Das Konfigurationssystem weist darüber hinaus den Vorteil auf, dass eine Schnittstelle für die Diagnose der Konfigurierung (Parametrisierung und/oder Initialisierung) gegeben ist. Über diese sind unter anderem Stati, Fortschrittsinformationen, Fehler etc. erkennbar.

Die Konfiguration der Steuereinheiten kann in verschiedenen Topologien des Konfigurationssystems erfolgen. Das Konfigurier-. Pärametrier- bzw. Initialisiersystem kann also so genanntes Client-/Master-System konzipiert werden. Hierbei konfiguriert, d.h. parametriert bzw. initialisiert, ein zentrales Steuergerät (der so genannte Master) die als Clients bezeichneten Steuereinheiten.

Das Konfiguriersystem könnte auch als so genanntes Client-/Server-System konzipiert werden. Hierbei holen sich die Steuereinheiten (Clients) die Konfigurierinformationen von einem zentralen Steuergerät, welches als Server bezeichnet ist. Eine derartige Situation ist in der Figur des Ausführungsbeispiels dargestellt. Dieses zeichnet sich dadurch aus, dass die jeweiligen Steuereinheiten jeweils über einen Speicher für Konfigurierinformationen über sich selbst sowie für Auswertungsvorschriften verfügen. Zudem ist dann eine Auswerteeinheit zur Interpretation der Auswertungsvorschriften notwendig.

Neben einer zweischichtigen Hierarchie kann das Konfiguriersystem auch auf mehr Schichten organisiert sein. Beispielsweise konfiguriert ein zentraler Master eine Anzahl an Submastern oder Controllern, die ihrerseits wiederum Client-Funktionen konfigurieren. Die Hierarchisierung kann sich hierbei an Domänen orientieren, d.h. es ist z.B. jeweils ein Controller in einem Entertainment-, in einem Sicherheits-, in einem Antriebs- oder in einem Karosseriesubsystem, etc. vorgesehen.

Um das Verfahren Ressourcen sparend und skalierbar zu machen und es damit auch auf Steuereinheiten mit lediglich kleinen Speichern und Prozessoren einsetzbar zu machen, sind verschiedene Realisierungen möglich. Bevorzugt erfolgt eine Modularisierung des Konfiguriersystems. Das Format bzw. die Sprache, in der Bedingungen spezifiziert sind, enthält unter anderem Vergleichsprädikate wie z.B. =, >, <, Quantoren wie z.B. "exists" sowie Verknüpfungsoperatoren wie z.B. AND, OR, NOT. Die Spezifikationssprache kann z.B. als eine vereinfachte Teilmenge einer Aussagenlogik oder einer Prädikatenlogik erster Stufe realisiert sein. Dabei ist es ausreichend, wenn lediglich eine Teilmenge gewählt wird, da nicht alle Möglichkeiten der Prädikatenlogik benötigt werden. Aus Gründen der Ressourceneinsparung ist es zweckmäßig, nur die jeweils kleinste nötige Teilmenge zu wählen. Als technisches Format bietet sich die XML-Sprache an, so dass auch die Spezifikation der Sprache modularisiert werden kann.

Die Auswerteeinheit (Parser und Auswerter) für die Vergleichsprädikate und auch Verknüpfungsoperatoren ist bevorzugt modular realisiert, d.h. für jeden Operator gibt es ein unabhängiges Mittel. Unabhängig bedeutet in diesem Zusammenhang, dass ein Nicht-Vorhandensein oder Entfernen des Moduls von der Steuereinheit keine Auswirkung auf die Module mit den anderen Operatoren bzw. die Funktionsfähigkeit der gesamten Auswerteeinheit hat.

Wird eine Steuereinheit später, z.B. bei einem Service des Fahrzeugs, aktualisiert, so wird die Auswerteeinheit für diese Steuereinheit gegebenenfalls ebenfalls dynamisch aktualisiert. Dies kann durch objektorientierte Mechanismen, wie z.B. Überladung oder Polymorphie erfolgen. Das/die Modul/e für den/die neu hinzugekommenen Operator/en fügen sich dynamisch in das Framework der Auswerteeinheit ein. So wird einerseits nur die jeweils minimal nötige Menge an Ressourcen erforderlich, jedoch andererseits kann eine optimale Erweiterbarkeit zu beliebigen Zeitpunkten erzielt werden.

Alternativ kann bei der Aktualisierung einer Steuereinheit, z.B. beim Service des Fahrzeugs, ebenfalls eine neue, erweiterte Version der Auswertungsvorschriften aufgespielt werden. Die passende Version kann z.B. auf einem so genannten Tester beim Service generiert werden, indem der Präprozessor auf die neuen Konfigurierinformationen angewendet wird. Alternativ können sämtliche Versionen der Auswerteeinheit vorgehalten werden, so dass ein Prüfprogramm zu den in der Konfigurierinformation vorhandenen Operatoren die passende Version des Parsers ausgibt.

Die vorliegende Erfindung ermöglicht die automatische Konfigurierung von Steuereinheiten eines Konfigurationssystems ohne externe Werkzeuge. Das Verfahren ermöglicht eine hohe Effizienz und Stabilität der Prozesse, sowohl in der Entwicklung als auch in der Produktion und im Service, und sorgt darüber hinaus für eine Verringerung des Logistikaufwandes. Es ist ebenso sichergestellt, dass ein geringer Aufwand der Änderungen anfällt. Ein weiterer Vorteil besteht in einer hohen Stabilität der in einem Konfigurationssystem miteinander kommunizierenden Steuereinheiten. Darüber hinaus werden standardisierte Software-Module ermöglicht. Ein Vorteil besteht darin, dass eine neue (Teil-)Funktion bzw. eine neue Bordnetz-Komponente automatisch erkannt wird. Diese wird automatisch ohne Zuhilfenahme externer Werkzeuge parametriert. Falls für die Inbetriebnahme die Ausführung von Inbetriebnahmeschritten notwendig ist, wird die neue Teil-(Funktion) bzw. die neue Bordnetz-Komponente automatisch initialisiert.

## Patentansprüche

1. Konfigurationssystem (1) eines Fahrzeugs, mit
- mindestens einer Funktionseinheit (14),
- einer zu der Funktionseinheit (14) zugehörigen Steuereinheit (2,3,4,5), und
- einer im Fahrzeug vorgesehenen Parametriereinheit (11), die mit der Steuereinheit (2,3,4,5) operativ verbunden ist,
- einem durch die Parametriereinheit (11) auslesbaren Speichermittel (7,8,9,10,12), das Konfigurationsinformationen für die Steuereinheit (2,3,4,5) enthält, anhand denen eine Parametrierung der Steuereinheit (2,3,4,5) vornehmbar ist,
- das Speichermittel (7,8,9,10,12) umfasst ferner Konfigurationsinformationen für das Fahrzeug,
- das Speichermittel (7,8,9,10,12) Auswertungsvorschriften enthält, anhand denen die Parametriereinheit (11) aus den Konfigurationsinformationen für das Fahrzeug und den Konfigurationsinformationen für die Steuereinheit (2,3,4,5) Konfigurationsdaten für die Konfiguration der Parametriereinheit (11) ermittelt und die Steuereinheit (2,3,4,5) konfiguriert,
**dadurch gekennzeichnet, dass**
- die Parametriereinheit (11) die für die Parametrierung der Steuereinheit (2,3,4,5) fehlenden Konfigurationsinformationen identifiziert,
- die fehlenden Konfigurationsinformationen aus dem Speichermittel (7,8,9,10,12) ausliest, und
- die fehlenden Konfigurationsinformationen anhand der Auswertungsvorschriften auswertet und eine Parametrierung der Steuereinheit (2,3,4,5) vornimmt.

2. Konfigurationssystem nach Anspruch 1, **dadurch gekennzeichnet, dass** dieses eine Ablaufsteuereinheit (15) umfasst, die den Ablauf der Konfiguration der Steuereinheit (2,3,4,5) steuert und überwacht.

3. Konfigurationssystem nach Anspruch 2, **dadurch gekennzeichnet, dass** die Ablaufsteuerung dazu eingerichtet ist, Zustände und/oder Bedingungen und/oder Triggersignale des Konfigurationssystems (1) zu erkennen.

4. Konfigurationssystem nach einem der vorherigen Ansprüche, **dadurch gekennzeichnet, dass** die Konfigurationsinformationen für die Steuereinheit (2,3,4,5), die Konfigurationsinformationen für das Fahrzeug und die Auswertungsvorschriften in einem generischen Format in dem Speichermittel (7,8,9.10,12) gespeichert sind.

5. Konfigurationssystem nach einem der vorherigen Ansprüche, **dadurch gekennzeichnet, dass** die Konfigurationsinformationen Bedingungen hinsichtlich eines Parameterwerts und/oder eines Verhaltens der Steuereinheit (2,3,4,5) und/oder eines Inbetriebnahmeschritts und/oder eines Vorhandenseins einer weiteren Steuereinheit (2,3,4,5) umfassen, welche zur Vornahme einer Parametrierung und/oder Initialisierung erfüllt sein müssen.

6. Konfigurationssystem nach einem der vorherigen Ansprüche, **dadurch gekennzeichnet, dass** das Speichermittel (7,8,9,10,12) einen in der Steuereinheit (2,3,4,5) angeordneten Speicher (7,8,9,10) zur Aufnahme von Konfigurationsinformationen für die Steuereinheit (2,3,4,5) und/oder den Auswertungsvorschriften umfasst.

7. Konfigurationssystem nach einem der vorherigen Ansprüche, **dadurch gekennzeichnet, dass** das Speichermittel (7,8,9.10,12) einen in der Parametriereinheit (11) angeordneten Speicher (12) zur Aufnahme von Konfigurationsinformationen für das Fahrzeug und/oder den Auswertungsvorschriften umfasst.

8. Konfigurationssystem nach einem der vorherigen Ansprüche, **dadurch gekennzeichnet, dass** die Parametriereinheit (11) als zumindest eine zentrale Steuereinheit ausgebildet ist.

9. Konfigurationssystem nach einem der vorherigen Ansprüche, **dadurch gekennzeichnet, dass** die Parametriereinheit (11) durch die Steuereinheit (2.3,4,5) gebildet ist.

10. Verfahren zur Konfiguration mindestens einer zu einer Funktionseinheit (14) gehörigen Steuereinheit (2,3,4,5) eines Fahrzeugs mit
- einer im Fahrzeug vorgesehenen Parametriereinheit (11), die mit der Steuereinheit (2,3,4,5) operativ verbunden ist,
- einem durch die Parametriereinheit (11) ausgelesenen Speichermittel (7,8,9,10,12), das Konfigurationsinformationen für die Steuereinheit (2,3,4,5) enthält, anhand denen eine Parametrierung der Steuereinheit (2,3,4,5) vorgenommen wird,
- das Speichermittel (7,8,9,10,12) ferner Konfigurationsinformationen für das Fahrzeug umfasst,
- das Speichermittel (7,8,9,10,12) Auswertungsvorschriften enthält, anhand denen die Parametriereinheit (11) aus den Konfigurationsinformationen für das Fahrzeug und den Konfigurationsinformationen für die Steuereinheit (2,3,4,5) Konfigurationsdaten für die Konfiguration der Parametriereinheit (11) und die Steuereinheit (2,3,4,5) konfiguriert,
**dadurch gekennzeichnet, dass**
- die Parametriereinheit (11) die für die Parametrierung der Steuereinheit (2,3,4,5) fehlenden Konfigurationsinformationen identifiziert,
- die fehlenden Konfigurationsinformationen aus dem Speichermittel (7,8,9,10,12) ausliest, und
- die fehlenden Konfigurationsinformationen anhand der Auswertungsvorschriften auswertet und eine Parametrierung der Steuereinheit (2,3,4,5) vornimmt.

11. Verfahren nach Anspruch 10, **dadurch gekennzeichnet, dass** die Parametrierung eine Ermittlung von zu setzenden Parameterwerten der Steuereinheit (2,3,4,5) und das Setzen entsprechender Parameterwerte umfasst.

12. Verfahren nach Anspruch 10, **dadurch gekennzeichnet, dass** die Parametrierung eine Auswertung von Bedingungen umfasst.

13. Verfahren nach einem der Ansprüche 10 bis 12, **dadurch gekennzeichnet, dass** die Parametriereinheit (11) zur Initialisierung der Steuereinheit (2,3,4,5)
- aus einem Speichermittel (7,8,9,10,12) des Konfigurationssystems (1) Konfigurationsinformationen für die Steuereinheit (2,3,4,5) anhand der Auswertungsvorschriften ausliest und auswertet,
- die für eine Initialisierung der Steuereinheit (2,3,4,5) fehlenden Konfigurationsinformationen identifiziert,
- die fehlenden Konfigurationsinformationen aus dem Speichermittel (7,8,9,10,12) ausliest, und
- die fehlenden Konfigurationsinformationen anhand der Auswertungsvorschriften auswertet und eine Initialisierung der Steuereinheit (2,3,4,5) vornimmt.

14. Verfahren nach einem der Ansprüche 10 bis 13, **dadurch gekennzeichnet, dass** die Konfiguration individuell für jede Steuereinheit (2,3,4,5) durchgeführt wird.

15. Verfahren nach einem der Ansprüche 10 bis 14, **dadurch gekennzeichnet, dass** die Konfiguration der Steuereinheit (2,3,4,5) durch eine zentrale Steuereinheit vorgenommen wird, welche das Speichermittel (7,8,9,10,12) mit zumindest den Konfigurationsdaten für das Fahrzeug umfasst.

16. Verfahren nach einem der Ansprüche 10 bis 14, **dadurch gekennzeichnet, dass** die Konfiguration durch die Steuereinheit (2,3,4,5) selbst vorgenommen wird, weiche aus einem zentral verfügbaren Speichermittel (7,8,9,10,12) die für eine Konfiguration fehlenden Informationen ausliest und weiterverarbeitet.

17. Verfahren nach einem der Ansprüche 10 bis 16, **dadurch gekennzeichnet, dass** die Konfiguration und Steuerung durch eine Ablaufsteuerung (15) erfolgt.

## Claims

1. A configuration system (1) of a vehicle, comprising
- at least one functional unit (14),
- a control unit (2, 3, 4, 5) pertaining to the functional unit (14), and
- a parameterising unit (11) provided in the vehicle and operatively connected to the control unit (2, 3, 4, 5),
- a storage means (7, 8, 9, 10, 12) which can be read by the parameterising unit (11) and containing the configuration information for the control unit (2, 3, 4, 5), with the aid of which the control unit (2, 3, 4, 5) can be parameterised,
- the storage means (7, 8, 9, 10, 12) also comprising configuration information for the vehicle,
- the storage means (7, 8, 9, 10, 12) containing evaluation instructions, with the aid of which the parameterising unit (11) determines configuration data for the configuration of the parameterising unit (11) from the configuration information for the vehicle and the configuration information for the control unit (2, 3, 4, 5) and configures the control unit (2, 3, 4, 5),
**characterised in that**
- the parameterising unit (11) identifies the configuration information which is missing for the parameterisation of the control unit (2, 3, 4, 5),
- reads the missing configuration information from the storage means (7, 8, 9, 10, 12), and
- evaluates the missing configuration information with the aid of the evaluation instructions and carries out a parameterisation of the control unit (2, 3, 4, 5).

2. A configuration system according to claim 1, **characterised in that** the latter comprises a sequence control unit (15), which controls and monitors the sequence of the configuration of the control unit (2, 3, 4, 5).

3. A configuration system according to claim 2, **characterised in that** the sequence control is set up to recognise states and/or conditions and/or trigger signals of the configuration system (1).

4. A configuration system according to any one of the preceding claims, **characterised in that** the configuration information for the control unit (2, 3, 4, 5), the configuration information for the vehicle and the evaluation instructions are stored in a generic format in the storage means (7, 8, 9, 10, 12).

5. A configuration system according to any one of the preceding claims, **characterised in that** the configuration information comprises conditions with regard to a parameter value and/or a behaviour of the control unit (2, 3, 4, 5) and/or an initial operating step, and/or a presence of a further control unit (2, 3, 4, 5), which have to be met for carrying out a parameterisation and/or initialisation.

6. A configuration system according to any one of the preceding claims, **characterised in that** the storage means (7, 8, 9, 10, 12) comprises a memory (7, 8, 9, 10) arranged in the control unit (2, 3, 4, 5) for receiving configuration information for the control unit (2, 3, 4, 5) and/or the evaluation instructions.

7. A configuration system according to any one of the preceding claims, **characterised in that** the storage means (7, 8, 9, 10, 12) comprises a memory (12) arranged in the parameterising unit (11) for receiving configuration information for the vehicle and/or the evaluation instructions.

8. A configuration system according to any one of the preceding claims, **characterised in that** the parameterising unit (11) is configured as at least one central control unit.

9. A configuration system according to any one of the preceding claims, **characterised in that** the parameterising unit (11) is formed by the control unit (2, 3, 4, 5).

10. A method for configuring at least one control unit (2, 3, 4, 5) of a vehicle pertaining to a functional unit (14), comprising
- a parameterising unit (11) which is provided in the vehicle and operatively connected to the control unit (2, 3, 4, 5),
- a storage means (7, 8, 9, 10, 12) which is read by the parameterising unit (11) and contains configuration information for the control unit (2, 3, 4, 5), with the aid of which the control unit (2, 3, 4, 5) is parameterised,
- the control means (7, 8, 9, 10, 12) also comprises configuration information for the vehicle,
- the storage means (7, 8, 9, 10, 12) contains evaluation instructions, with the aid of which the parameterising unit (11) determines configuration data for the configuration of the parameterising unit (11) from the configuration information for the vehicle and the configuration information for the control unit (2, 3, 4, 5), and configures the control unit (2, 3, 4, 5),
**characterised in that**
- the parameterising unit (11) identifies the configuration information which is missing for the parameterisation of the control unit (2, 3, 4, 5),
- reads the missing configuration information from the storage means (7, 8, 9, 10, 12), and
- evaluates the missing configuration information with the aid of the evaluation instructions and carries out a parameterisation of the control unit (2, 3, 4, 5).

11. A method according to claim 10, **characterised in that** the parameterisation comprises a determination of parameter values of the control unit (2, 3, 4, 5) to be set and the setting of corresponding parameter values.

12. A method according to claim 10, **characterised in that** the parameterisation comprises an evaluation of conditions.

13. A method according to any one of claims 10 to 12, **characterised in that** the parameterising unit (11), to initialise the control unit (2, 3, 4, 5),
- reads configuration information for the control unit (2, 3, 4, 5) with the aid of the evaluation instructions from a storage means (7, 8, 9, 10, 12) of the configuration system (1) and evaluates it,
- identifies the configuration information which is missing for an initialisation of the control unit (2, 3, 4, 5),
- reads the missing configuration information from the storage means (7, 8, 9, 10, 12), and
- evaluates the missing configuration information with the aid of the evaluation instructions and carries out an initialisation of the control unit (2, 3, 4, 5).

14. A method according to any one of claims 10 to 13, **characterised in that** the configuration is carried out individually for each control unit (2, 3, 4, 5).

15. A method according to any one of claims 10 to 14, **characterised in that** the configuration of the control unit (2, 3, 4, 5) is carried out by a central control unit, which comprises the storage means (7, 8, 9, 10, 12) with at least the configuration data for the vehicle.

16. A method according to any one of claims 10 to 14, **characterised in that** the configuration is carried out by the control unit (2, 3, 4, 5) itself, which reads the information which is missing for a configuration from a centrally available storage means (7, 8, 9, 10, 12) and further processes it.

17. A method according to any one of claims 10 to 16, **characterised in that** the configuration and control are implemented by a sequence control (15).

## Revendications

1. Système de configuration (1) d'un véhicule comprenant :
- au moins une unité fonctionnelle (14),
- une unité de commande (2, 3, 4, 5) associée à l'unité fonctionnelle (14), et
- une unité de paramétrage (11) dans le véhicule, reliée à l'unité de commande (2, 3, 4, 5) de façon à coopérer,
- un moyen de mémoire (7, 8, 9, 10, 12) que l'unité de paramétrage (11) peut lire, ce moyen de mémoire contenant des informations de configuration de l'unité de commande (2, 3, 4, 5) pour paramétrer l'unité de commande (2, 3, 4, 5),
- le moyen de mémoire (7, 8, 9, 10, 12) comporte en outre des informations de configuration du véhicule,
- le moyen de mémoire (7, 8, 9, 10, 12) comporte des prescriptions d'exploitation à l'aide desquelles l'unité de paramétrage (11) détermine des données de configuration pour assurer la configuration de l'unité de paramétrage à partir des informations de confirmation du véhicule et des informations de configuration de l'unité de commande (2, 3, 4, 5), et elle assure la configuration de l'unité de commande (2, 3, 4, 5),
**caractérisé en ce que**
l'unité de paramétrage (11) :
- identifie les informations de configuration manquantes pour paramétrer l'unité de commande (2, 3, 4, 5),
- extrait les informations de configuration manquantes du moyen de mémoire (7, 8, 9, 10, 12), et
- exploite les informations de configuration manquantes à l'aide des prescriptions d'exploitation, et elle effectue un paramétrage de l'unité de commande (2, 3, 4, 5).

2. Système de configuration selon la revendication 1,
**caractérisé en ce qu'**
il comporte une unité de commande de déroulement (15) qui commande et surveille le déroulement de la configuration de l'unité de commande (2, 3, 4, 5).

3. Système de configuration selon la revendication 2,
**caractérisé en ce que**
la commande de déroulement est conçue pour reconnaître des états et/ou des services et/ou des signaux de déclenchement du système de configuration (1).

4. Système de configuration selon les revendications précédentes,
**caractérisé en ce que**
les informations de configuration de l'unité de commande (2, 3, 4, 5), les informations de configuration du véhicule et les prescriptions d'exploitation sont mémorisées sous un format générique dans le moyen de mémoire (7, 8, 9, 10, 12).

5. Système de configuration selon les revendications précédentes,
**caractérisé en ce que**
pour effectuer un paramétrage et/ou une initialisation, les informations de configuration comprennent des conditions concernant la valeur d'un paramètre et/ou d'un comportement de l'unité de commande (2, 3, 4, 5) et/ou d'une étape de mise en oeuvre et/ou la présence d'une autre unité de commande (2, 3, 4, 5).

6. Système de configuration selon les revendications précédentes,
**caractérisé en ce que**
le moyen de mémoire (7, 8, 9, 10, 12) comporte une mémoire (7, 8, 9, 10) dans l'unité de commande (2, 3, 4, 5) pour recevoir les informations de configuration de l'unité de commande (2, 3, 4, 5) et/ou les prescriptions d'exploitation.

7. Système de configuration selon les revendications précédentes,
**caractérisé en ce que**
le moyen de mémoire (7, 8, 9, 10, 12) comporte une mémoire (12) dans l'unité de paramétrage (11) pour recevoir les informations de configuration du véhicule et/ou les prescriptions d'exploitation.

8. Système de configuration selon les revendications précédentes,
**caractérisé en ce que**
l'unité de paramétrage (11) est réalisée au moins comme une unité centrale de commande.

9. Système de configuration selon les revendications précédentes,
**caractérisé en ce que**
l'unité de paramétrage (11) est formée par l'unité de commande (2, 3, 4, 5).

10. Procédé de configuration d'au moins une unité de commande (2, 3, 4, 5) d'un véhicule appartenant à une unité fonctionnelle (14) comportant :
- une unité de paramétrage (11) dans le véhicule, et reliée de façon à coopérer avec l'unité de commande (2, 3, 4, 5),
- un moyen de mémoire (7, 8, 9, 10, 12) lu par l'unité de paramétrage (11), contenant les informations de configuration de l'unité de commande (2, 3, 4, 5) à l'aide desquelles se fait le paramétrage de l'unité de commande (2, 3, 4, 5),
- le moyen de mémoire (7, 8, 9, 10, 12) comporte en outre les informations de configuration pour le véhicule,
- le moyen de mémoire (7, 8, 9, 10, 12) contient des prescriptions d'exploitation à l'aide desquelles, l'unité de paramétrage (11) détermine les données de configuration pour assurer la configuration de l'unité de paramétrage à partir des informations de configuration du véhicule et les informations de configuration de l'unité de commande (2, 3, 4, 5), et configure l'unité de commande (2, 3, 4, 5),
**caractérisé en ce que**
l'unité de paramétrage (11) :
- identifie les informations de configuration manquantes pour paramétrer l'unité de commande (2, 3, 4, 5),
- extrait les informations de configuration manquantes des moyens de mémoire (7, 8, 9, 10, 12), et
- exploite les informations de configuration manquantes à l'aide des prescriptions d'exploitation et assure le paramétrage de l'unité de commande (2, 3, 4, 5).

11. Procédé selon la revendication 10,
**caractérisé en ce que**
le paramétrage comprend la détermination des valeurs de paramètres à fixer dans l'unité de commande (2, 3, 4, 5) ainsi que la mise en place des valeurs de paramètres, correspondantes.

12. Procédé selon la revendication 10,
**caractérisé en ce que**
le paramétrage comprend une exploitation de conditions.

13. Procédé selon les revendications 10 à 12,
**caractérisé en ce que**
pour initialiser l'unité de commande (2, 3, 4, 5), l'unité de paramétrage (11) :
- extrait d'un moyen de mémoire (7, 8, 9, 10, 12) du système de configuration (1), les informations de configuration pour l'unité de commande (2, 3, 4, 5) à l'aide des prescriptions d'exploitation et exploite ces informations,
- identifie les informations de configuration manquantes pour initialiser l'unité de commande (2, 3, 4, 5),
- extrait les informations de configuration manquantes de la mémoire (7, 8, 9, 10, 12), et
- exploite les informations de configuration manquantes à l'aide des prescriptions d'exploitation et assure l'initialisation de l'unité de commande (2, 3, 4, 5).

14. Procédé selon les revendications 10 à 13,
**caractérisé en ce qu'**
on effectue la configuration individuellement pour chaque unité de commande (2, 3, 4, 5).

15. Procédé selon les revendications 10 à 14,
**caractérisé en ce que**
la configuration de l'unité de commande (2, 3, 4, 5) est faite par une unité centrale de commande qui comprend le moyen de mémoire (7, 8, 9, 10, 12) avec au moins les données de configuration du véhicule.

16. Procédé selon les revendications 10 à 14,
**caractérisé en ce que**
la configuration est faite d'elle-même par l'unité de commande (2, 3, 4, 5) qui extrait, d'un moyen de mémoire (7, 8, 9, 10, 12) disponible de manière centrale, les informations manquantes pour la configuration et les traite.

17. Procédé selon les revendications 10 à 16,
**caractérisé en ce que**
la configuration et la commande se font par une commande déroulante (15).
